# EUROPEAN PATENT SPECIFICATION

(11) **EP 2 804 018 B1**
(45) Date of publication and mention of the grant of the patent: **11.01.2017**
(21) Application number: 13865393.6
(22) Date of filing: 14.11.2013
(51) Int. Cl.: G01V 1/157

(54) **MULTI-ELECTRODE EMITTING ARRAY OF BIPOLAR PULSE DISCHARGE**
MULTIELEKTRODENEMITTIERENDE ANORDNUNG EINER BIPOLAREN IMPULSENTLADUNG
RÉSEAU ÉMETTEUR MULTI-ÉLECTRODE DE DÉCHARGE D'IMPULSIONS BIPOLAIRES

(30) Priority: 17.12.2012 CN 201210549513
(43) Date of publication of application: 19.11.2014
(73) Proprietor: Zhejiang University, Hangzhou, Zhejiang 310027 (CN)
(72) Inventor: HUANG, Yifan, Hangzhou Zhejiang 310028 (CN); LIU, Zhen, Hangzhou Zhejiang 310028 (CN); YAN, Keping, Hangzhou Zhejiang 310028 (CN)
(74) Representative: Gulde & Partner
(86) International application number: PCT/CN2013/087098
(87) International publication number: WO 2014/094512

(56) References cited:
- CN-A- 102 998 695
- CN-U- 201 654 243
- CN-U- 201 654 243
- CN-U- 202 975 344
- CN-U- 202 975 345
- CN-Y- 2 738 263
- FR-A1- 2 574 559
- GB-A- 2 348 954
- GB-A- 2 348 954
- US-A- 5 841 737

## Description

### Field of the Invention

The present invention relates to the field of pulsed discharge technology, specifically concerning multi-electrode emitting arrays of bipolar pulsed discharge.

### Background of the Invention

As a non-explosive source, sparkers were first applied in marine seismic exploration. The basic operating process is that the capacitive energy within a sparker is converted into intensive pulsed sound waves, and this conversion is initiated by a high-voltage pulsed discharge under water.

In 1956, Knott and Hersey achieved electrode discharge through simple capacitive energy storage, thus generating pulsed waves which could penetrate hundreds of meters through the undersea formation and obtain a continuous stratigraphic section via dragging. Alpine Geophysical further developed the first sparker system in 1957. Over subsequent decades sparkers were developed rapidly, and devices of different energy levels were produced by companies such as EG&G, Fairfield, and Aquatronics. At present, sparkers are principally applied to oceanic high resolution shallow seismic exploration. In particular, sparkers as instruments for geological prospecting are essential for oceanic engineering geological exploration. Worldwide, the products developed by GEO-Spark in the Netherlands, SIG in France, Applied Acoustic in the UK, etc., are frequently employed, while, the main interior components are developed by Zhejiang University. The sparkers mentioned above all comprise three main components: the pulsed power supply, the transmission line, and the emitting array. The pulsed power supply produces an intensive pulse via compressing power, the transmission line plays a role in transmitting the resultant energy, and the emitting array, known as the transducer, converts the electrical energy into acoustic energy.

At present, the multi-electrode structure is widely applied in the emitting arrays of sparkers. Different products have different structures and while the discharge polarities vary, each product generally adopts either positive or negative discharge.

GB 2 348 954, for example, discloses a multi-electrode emitting array of pulsed discharge comprising the following components: a fixed framework, binding post, and n sets of emitters. Each emitter consists of several emitting electrodes side by side, installed on a fixed framework; the binding posts are located on one side of the fixed framework; and n is a natural number greater than zero. An emitting electrode is composed of a metal core and an insulator, and one end of the metal core acts as the emitting head of the emitting electrode while the other end is connected to the binding post by a connecting line.The emitting electrodes of the emitter are connected to the corresponding terminals of the binding posts through a shared connecting line.

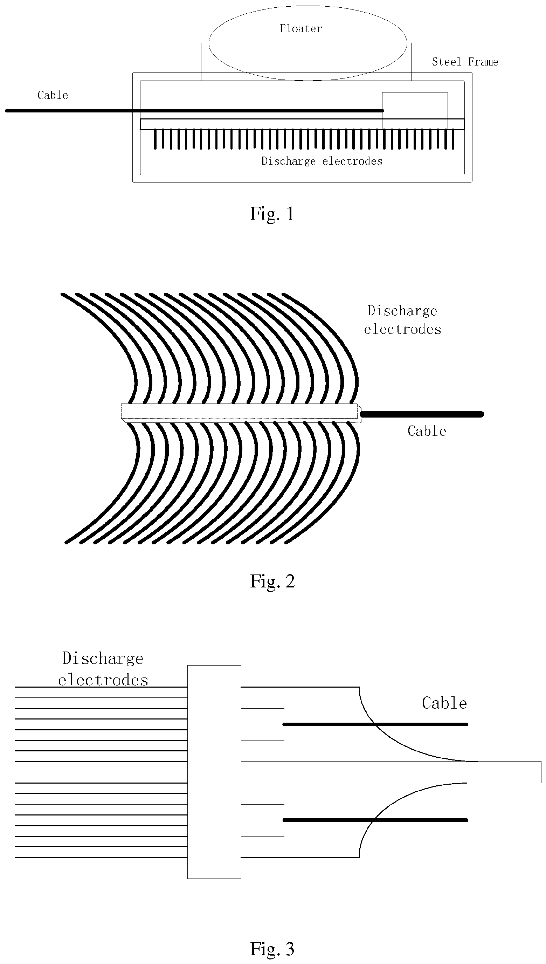

In the GEO-Spark adopted planar array (Fig. 1), all the negative emitting electrodes are arranged downwards, the framework is made of stainless steel, and the floats are equipped on both sides of the framework. The advantage of this emitting array is its lifetime of over 5 years (limited as a result of slight electrode wearing). The disadvantage, however, is that the energy efficiency of the negative discharge is lower than that of the positive discharge. Moreover, this structure is too cumbersome to drag and therefore high streamer tensile strength is required.

SIG, in France, adopted a structure which is analogous to fishbone spurs (Fig. 2), in which the positive emitting electrodes are arranged towards both sides and the structure is frameless and simple. The advantage of this lightweight design is that a streamer of high tensile strength is not necessary. The disadvantage of this design, however, is that the electrode wears dramatically and results in a lifetime of less than 1 year for positive discharge.

Applied Acoustic in the UK employs a brush structure (Fig. 3), in which the emitting electrodes are bundled together and in a backwards direction. Moreover, the positive discharge also results in a short lifetime. Otherwise, this structure can be seen as point source without directivity which leads to low energy efficiency.

As the three emitting arrays mentioned above are all unipolar, it is necessary to find a pulsed power supply to match them. For instance, a positive discharge needs a high-voltage pulsed power with positive output and a negative polarity discharge needs a power supply with negative output. The high-voltage output is obtained through the emitting array via the transmission lines and the low-voltage output is connected to the stainless frame or the metallic piece exposed under water.

### Summary of The Invention

Taking the technical defects of the previous designs described above into consideration, the present invention provides a multi-electrode emitting array of bipolar pulsed discharge which does not have to match the polarity of the pulsed source output and is able to overcome the short lifetime problems of the positive emitting array, and the low energy efficiency and cumbersome structure of the negative emitting array.

A multi-electrode emitting array of bipolar pulsed discharge is developed comprising the following components: a fixed framework, binding post, and 2*n* m emitters, where each emitter consists of several emitting electrodes side-by-side which are all installed on the fixed framework. The binding posts are located on one side of the fixed framework and *n* is a natural number greater than zero. An emitting electrode is composed of a copper core and an insulator, and one end of the copper core acts as the emitting head of the emitting electrode while the other end is connected to the binding post by a connecting line. The emitting electrodes of the emitter are connected to the corresponding terminals of the binding posts through a shared connecting line. 2*n* groups of emitters comprise *n* sets of positive and *n* sets of corresponding negative emitters, while the diameter of the positive emitter's copper core is larger than that of the negative emitter. In each group of positive emitters and the corresponding negative emitters, the emitting heads are arranged oppositely.

The fixed framework mentioned above has *n* sets of bars, which are composed of *n* + 1 horizontal fixed tubes and two longitudinal supporting tubes connected mutually. Each bar is a rectangle consisting of two horizontal fixed tubes and two longitudinal supporting tubes, while one positive emitter and one negative emitter of each bar are fixed on the horizontal fixed tubes. The adjacent bars share a public horizontal fixed tube, and two groups of emitting electrodes of the same polarity are respectively installed on both sides of each horizontal fixed tube. The public connecting line of the emitter is fixed in the horizontal fixed tubes and is connected to the corresponding terminal through the horizontal fixed tubes. The two groups of emitting electrodes in each horizontal fixed tube share a public connecting line, the common connecting line of the emitter is joined to the horizontally fixed tube, and is connected to the corresponding terminal through the horizontal fixed tube. Preferably, the balance tail, which maintains the balance of the emitting array as it is towed, is installed on the other side of the fixed framework.

The fixed frame is suspended in water and has an insulating layer composed of polyurethane or some other insulating material. The horizontal fixed tube, the longitudinal support tube, and the balance tail are made of stainless steel or a rigid plastic material. The binding post is watertight, has one input terminal and *n* + 1 outlet terminals, and it is either hollow or filled with an insulating medium. The input terminal is connected to the tow cables, while the *n* + 1 outlet terminals are connected to *n* + 1 cables educed from the horizontal fixed tubes.

The positive emitting electrodes are high-voltage electrodes while the negative emitters belong to low-voltage electrodes, in the case where the emitting array is loaded with a positive high-voltage pulsed discharge. At negative voltage polarity, the setup is reversed. The number of sets of emitting electrodes and the amount of emitting electrodes in each group is based on the energy of the high-voltage pulse, which can be equal or unequal to the number of emitting electrodes in each group.

The most important condition for generating a high-voltage pulsed discharge is that the electrode tip has a very high electric field intensity and current density depending on the contact area between the electrode and the water only, i.e., the water conductivity rather than electric potential. Under the same energy conditions, when the contact area is smaller and the conductivity is higher, the discharge phenomenon will be more dramatic and the generated shock wave will be stronger. For a unipolar pulsed discharge, the discharge electrode is connected to the high-voltage output of the pulsed power source, while only the tip of the electrode remains exposed under water. However, the low-voltage output is connected to the metal frame of the emitting array or the metal block (with a large area exposed under water), so that the pulsed discharge only occurs in the high-voltage area.

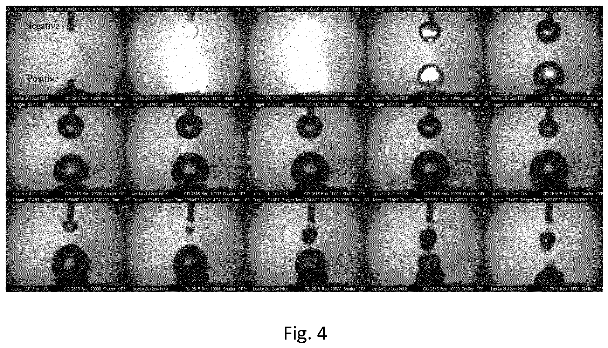

For the bipolar pulsed discharge proposed for this invention, the discharge electrodes are synchronously connected to the high-voltage and the low-voltage output of the pulsed power supply. A high-voltage pulsed discharge is generated for both ends of the discharge electrodes, having the same electric field intensity and current density. Based on circuit theory, two equivalent loads in series are applied between the high-voltage and the low-voltage output of the pulsed power supply, and thus the discharge energy will be assigned to the two loads simultaneously. Figure 4 shows the high-speed photography results for the bubble oscillation and the bipolar discharge, in which the top image is for the negative electrode and the positive electrode result is shown in the lower image. From the figure, it can be seen that the bubbles generated by the negative electrodes are smaller than those generated by the positive electrodes, mainly because the inception voltage of the positive discharge is lower than that of the negative discharge.

The advantageous features of the present invention are as follows:
(1) The present invention adopts a bipolar discharge which requires no special matching to the polarity of the output of the pulsed power supply, so it can be applied to the positive negative output of the high-voltage pulsed power supply.
(2) The invention adopts two emitting electrode specifications, such that the positive transmitting electrodes are thicker than those of negative polarity. As a result, the thicker diameter can slow the loss rate of the positive electrodes, while the negative electrodes are not depleted. At the same time, the inception voltage of the positive discharge is lower than that of the negative discharge, thus the energy efficiency of the positive discharge is higher. It can be concluded that the present invention combines the high energy efficiency feature of the positive emission and the lossless transmitting electrode characteristic of the negative polarity.
(3) The present invention adopts a simpler frame structure, in comparison to previous designs, to overcome the drawbacks of the bulky frame of a negative transmitting array; moreover, the present frame structure is lightweight and easy to operate.

### Brief Description of the Drawings

Figure 1 is a schematic diagram of the structure of the GEO-Spark emitting array (Holland).
Figure 2 is a schematic diagram of the SIG emitting array structure (France).
Figure 3 is a schematic diagram of the Applied Acoustic emitting array structure (UK).
Figure 4 shows the high-speed photography of the bubble oscillation and the bipolar discharge (5,000 frames/s).
Figure 5 is a schematic diagram of an instance of the emitting array provided by the present invention.
Figure 6 is the schematic diagram of another instance of the emitting array provided by this invention.
Figure 7 shows the waveform of the acoustic pulse in the case of the positive discharge generated by the emitting array.
Figure 8 shows the waveform of the acoustic pulse in the case of the negative discharge generated by the emitting array.
Figure 9 shows the waveform of the acoustic pulse in the case of the bipolar discharge generated by the emitting array.

### Description of The Preferred Embodiment

In order to more specifically describe the present invention, the technical setup will be described in detail, using accompanying drawings and descriptions of the specific components.

### Embodiment 1

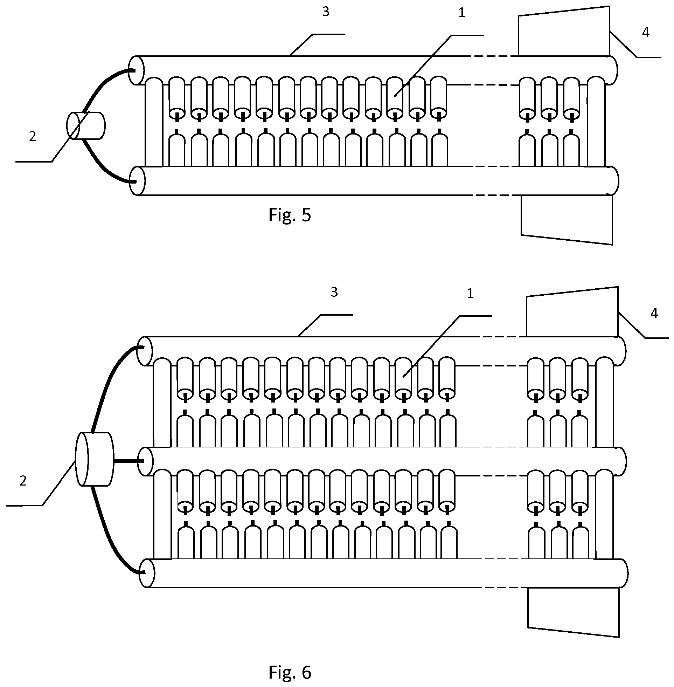

As shown in Figure 5, a multi-electrode emitting array of bipolar pulsed discharge comprises a fixed framework (3), binding post (2), balance tail (4), and two groups of emitters which consist of the emitting electrodes (1) installed side by side on the fixed framework (3). The binding posts are located on the left side of the framework, the balance tail is attached on the right side, and the fixed framework is suspended in the water.

The emitting electrodes consist of copper cores resistant to high voltage and insulating layers. One end of the copper core acts as an emitter, while the other is connected to the binding post through the connecting line. The insulating layer is made of polyurethane, with a thickness of approximately 2 mm. The connecting lines are composed of coaxial transmission lines, and the inner and outer conductors are 200 shares of enamelled wires with 0.3-mm diameter.

The two groups of emitters consist of a set of positive emitters and a corresponding set of negative emitters. The length of the emitting electrodes is 2.5 cm, and the diameters of the copper cores of the positive emitting electrodes are larger than those of negative polarity. In each group containing a positive emitter and a corresponding emitter of negative polarity, the emitting heads are arranged oppositely. The fixed frame is composed of two horizontal fixed tubes and two longitudinal support tubes which were mutually connected, and the two horizontal fixed tubes are furnished with positive and negative emitters. The two groups of emitting electrodes in the horizontal fixed tube mentioned above share a public connecting line, and the common connecting line of the emitters is fixed in the horizontal fixed tubes, and connected to the corresponding binding post through the horizontal fixed tubes.

The longitudinal support tube and the balance tail are made of 304 stainless steel, and the horizontal fixed tube is a PVC pipe with an opening on one side in which a copper strip slightly shorter than the PVC pipe is placed. The emitting electrodes are welded onto the copper strip, one end of which is connected to the corresponding terminal of the binding post through the connecting line. Finally, the PVC tube is filled with epoxy resin to make a welding point and the copper strip is sealed. The binding post has a cylindrical sealing structure with one input terminal connected to the trailing cable and two terminals connected to two sets of emitters through the connecting lines from the two horizontal fixed tubes.

If the high-voltage pulse applied to the emitting array is positive, the positive emitter acts as a HV electrode, while the negative emitter functions as a low-voltage electrode. Conversely, if the high-voltage pulse applied to the emitting array is negative, the positive emitter acts as a low-voltage electrode, while the negative emitter is the HV electrode.

### Embodiment 2

As shown in Figure 5, a multi-electrode emitting array of bipolar pulsed discharge is composed of a fixed framework (3), binding post (2), balance tail (4), and two groups of emitters which consist of the emitting electrodes (1) installed side-by-side on the fixed framework. The binding posts are located on the left side of the framework, the balance tail is attached to the right side, and the fixed framework is suspended in the water.

The emitting electrodes consist of copper cores resistant to high voltage and insulating layers. One end of the copper core acts as emitter, while the other is connected to the binding post through the connecting line. The insulating layer is made of polyurethane, with a thickness of approximately 2 mm. The connecting lines are composed of a coaxial transmission line, and the inner and outer conductors are 200 shares of enamelled wires with a diameter of 0.3 mm.

The four groups of emitters consist of two sets of positive emitters and two corresponding sets of negative emitters. The length of the emitting electrodes is 2.5 cm, and the diameter of the copper core of the positive emitting electrodes is larger than those of negative polarity. In each group containing a positive emitter and a corresponding emitter of negative polarity, the emitting heads are arranged oppositely. The fixed framework has two sets of bars, which are composed of three horizontal fixed tubes and two interconnected longitudinal supporting tubes. Each bar is a rectangle consisting of two horizontal fixed tubes and two longitudinal supporting tubes, and one positive emitter and its corresponding negative emitter for each bar are attached to the horizontal fixed tubes. The two groups of emitting electrodes in the horizontal fixed tube mentioned above share a public connecting line, and the common connecting line of the emitter is fixed in the horizontal fixed tubes, and connected to the corresponding binding post through the horizontal fixed tubes.

The two bars share a public horizontal fixed tube, and two groups of emitting electrodes of the same polarity are installed on the two sides of the horizontal fixed tube. The two groups of emitting electrodes in the horizontal fixed tube share a public connecting line, and the common connecting line of the emitter mentioned is fixed in the horizontal fixed tubes, and connected to the corresponding terminal through the horizontal fixed tube.

The longitudinal support tube and the balance tail are composed of 304 stainless steel, and the horizontal fixed tube is a PVC pipe with an opening on one side (the public horizontal fixed tube was open on both sides), in which a copper strip slightly shorter than the PVC pipe is attached. The emitting electrodes are welded onto the copper strip, one end of which is connected to the corresponding terminal of the binding post through the connecting line. Finally, the PVC tube is filled with epoxy resin to make the welding point and the copper strip is sealed. The binding post has a cylindrical sealing structure with one input terminal connected to the trailing cable and three terminals connected to three sets of emitters through the connecting lines from the four horizontal fixed tubes.

If the high-voltage pulse applied to the emitting array is positive, the positive emitter acts as HV electrode, while the negative emitter functions as a low-voltage electrode. If the high-voltage pulse applied to the emitting array is negative, the positive emitter acts as a low-voltage electrode, while the negative emitter is the HV electrode.

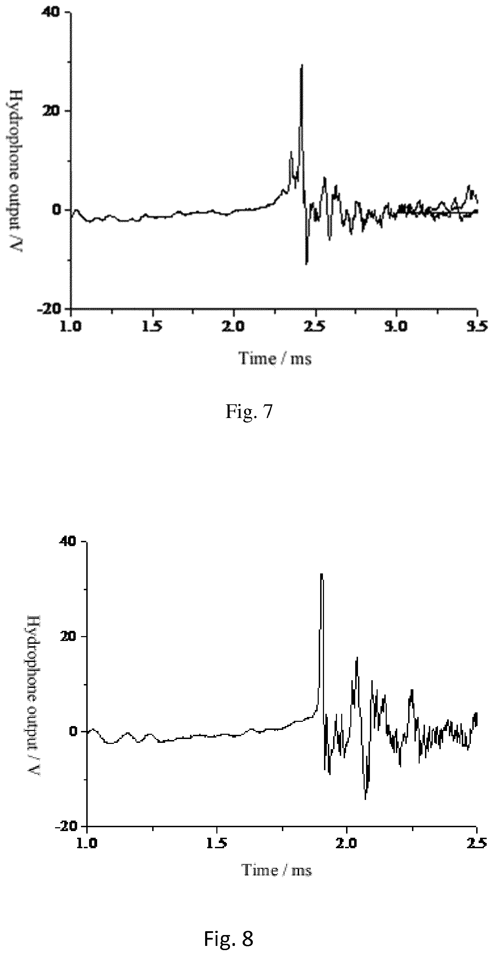

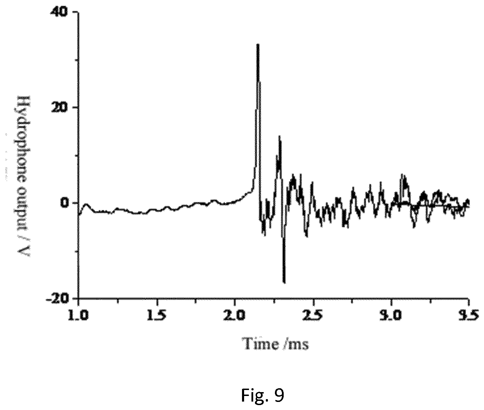

We adopted an emitting array consisting of 200 positive and 200 negative electrodes. The emitting electrodes were arranged oppositely with a spacing of 2 cm. This array can be actuated by both positive and negative pulsed power. Figures 7-9 show the waveforms of the acoustic pulse in the case of positive discharge, negative discharge, and bipolar discharge generated by the emitting array. The waveforms of the acoustic pulse were acquired with a hydrophone taking measurements at the same position. As shown in the figures, the peak value of the waveforms of the acoustic pulse generated by the positive and bipolar discharges is 34 V converted into source level with a value of 209 dB, while the peak value generated by the negative polarity discharge is 30 V converted into source level with a value of 207 dB. As a result, the energy efficiency of the positive and negative discharge is comparative, and the negative electrode experienced no depletion.

## Claims

1. A multi-electrode emitting array of bipolar pulsed discharge comprising the following components: a fixed framework, binding post, and 2n sets of emitters. Each emitter consists of several emitting electrodes side by side, installed on a fixed framework; the binding posts are located on one side of the fixed framework; and *n* is a natural number greater than zero,
the multi-electrode emitting array being **characterized in that** each emitting electrode is composed of a copper core and an insulator, and one end of the copper core acts as the emitting head of the emitting electrode while the other end is connected to the binding post by a connecting line,
wherein the emitting electrodes of each emitter are connected to the corresponding terminals of the binding posts through a shared connecting line,
wherein 2n groups of emitters comprise *n* sets of positive and *n* sets of corresponding negative emitters, while the diameter of a positive emitter's copper core is larger than that of a negative emitter.

2. The multi-electrode emitting array of claim 1, wherein all the emitting heads of the emitting electrodes are arranged oppositely.

3. The multi-electrode emitting array of claim 1, wherein in each group of positive emitters and corresponding negative emitters, the emitting heads are arranged oppositely.

4. The multi-electrode emitting array of claim 1, wherein the fixed framework has n sets of bars, and comprises of *n* + 1 horizontal fixed tubes and two longitudinal supporting tubes connected mutually, wherein each bar is a rectangle consisting of two horizontal fixed tubes and two longitudinal supporting tubes, while one positive emitter and one negative emitter of each bar are fixed on the horizontal fixed tubes.

5. The multi-electrode emitting array mentioned of claim 4, wherein the adjacent bars share a public horizontal fixed tube and two groups of emitting electrodes of the same polarity are installed on both sides of each horizontal fixed tube.

6. The multi-electrode emitting array of claim 4, wherein a public connecting line of the emitter is fixed in the horizontal fixed tubes, and is connected to the corresponding terminal through the horizontal fixed tubes.

7. The multi-electrode emitting array of claim 5, wherein two groups of emitting electrodes in the horizontal fixed tube share a public connecting line, the common connecting line of the emitter is located inside the tube and is connected to the corresponding terminal through the horizontal fixed tube.

8. The multi-electrode emitting array of claim 1, wherein a balance tail is installed on the other side of the fixed framework.

## Patentansprüche

1. Emittierende Anordnung aus mehreren Elektroden zur bipolar gepulsten Entladung, die die folgenden Bestandteile umfasst: ein festes Gestell, eine Anschlussklemme und 2n Sätze Emitter. Jeder Emitter besteht aus mehreren emittierenden Elektroden nebeneinander, angebracht an einem festen Gestell; die Anschlussklemmen befinden sich auf einer Seite des festen Gestells und *n* ist eine natürliche Zahl größer als Null,
wobei die emittierende Anordnung aus mehreren Elektroden **dadurch gekennzeichnet ist, dass** jede emittierende Elektrode aus einem Kupferkern und einem Isolator aufgebaut ist und ein Ende des Kupferkerns als emittierender Kopf der emittierenden Elektrode dient, während das andere Ende über eine Anschlussleitung mit der Anschlussklemme verbunden ist,
wobei die emittierenden Elektroden jedes Emitters mit den entsprechenden Anschlüssen der Anschlussklemmen durch eine gemeinsame Anschlussleitung verbunden sind,
wobei 2n Gruppen von Emittern *n* Sätze positiver und *n* Sätze entsprechender negativer Emitter umfassen, wobei der Durchmesser eines Kupferkerns eines positiven Emitters größer ist als der eines negativen Emitters.

2. Emittierende Anordnung aus mehreren Elektroden nach Anspruch 1, wobei alle emittierenden Köpfe der emittierenden Elektroden gegenüberliegend angeordnet sind.

3. Emittierende Anordnung aus mehreren Elektroden nach Anspruch 1, wobei in jeder Gruppe positiver Emitter und entsprechender negativer Emitter die emittierenden Köpfe gegenüberliegend angeordnet sind.

4. Emittierende Anordnung aus mehreren Elektroden nach Anspruch 1, wobei das feste Gestell n Sätze von Schienen aufweist und *n* + 1 waagerechte feste Röhren und zwei längs verlaufende Stützröhren umfasst, die miteinander verbunden sind, wobei jede Schiene ein Rechteck ist, das aus zwei waagerechten festen Röhren und zwei längs verlaufenden Stützröhren besteht, wobei ein positiver Emitter und ein negativer Emitter jeder Schiene an den waagerechten festen Röhren befestigt sind.

5. Emittierende Anordnung aus mehreren Elektroden nach Anspruch 4, wobei die benachbarten Schienen eine gemeinsam nutzbare waagerechte feste Röhre aufweisen und zwei Gruppen von emittierenden Elektroden mit derselben Polarität auf beiden Seiten jeder waagerechten festen Röhre angebracht sind.

6. Emittierende Anordnung aus mehreren Elektroden nach Anspruch 4, wobei eine gemeinsam nutzbare Anschlussleitung des Emitters in den waagerechten festen Röhren fixiert ist und durch die waagerechten festen Röhren mit dem entsprechenden Anschluss verbunden ist.

7. Emittierende Anordnung aus mehreren Elektroden nach Anspruch 5, wobei zwei Gruppen von emittierenden Elektroden in der waagerechten festen Röhre eine gemeinsam nutzbare Anschlussleitung aufweisen, die gemeinsame Anschlussleitung des Emitters in der Röhre angeordnet ist und durch die waagerechte feste Röhre mit dem entsprechenden Anschluss verbunden ist.

8. Emittierende Anordnung aus mehreren Elektroden nach Anspruch 1, wobei ein hinteres Ausgleichsende auf der anderen Seite des festen Gestells angebracht ist.

## Revendications

1. Réseau émetteur multi-électrode de décharge d'impulsions bipolaires comprenant les composants suivants : un cadre fixe, une borne de jonction et 2n jeux d'émetteurs. Chaque émetteur consiste en plusieurs électrodes d'émission disposées côte-à-côte, installées sur un cadre fixe ; les bornes de jonction sont situées sur un côté du cadre fixe ; et *n* est un entier naturel supérieur à zéro,
le réseau émetteur multi-électrode étant **caractérisé en ce que** chaque électrode d'émission est composée d'un noyau en cuivre et d'un isolant, et une extrémité du noyau en cuivre agit comme tête d'émission de l'électrode d'émission tandis que l'autre extrémité est raccordée à la borne de jonction par une ligne de raccordement,
dans lequel les électrodes d'émission de chaque émetteur sont raccordées aux bornes correspondantes des bornes de jonction par une ligne de raccordement partagée, dans lequel 2n groupes d'émetteurs comprennent *n* jeux d'émetteurs positifs et *n* jeux d'émetteurs négatifs correspondants, et le diamètre d'un noyau en cuivre d'émetteur positif est supérieur à celui d'un émetteur négatif.

2. Réseau émetteur multi-électrode selon la revendication 1, dans lequel toutes les têtes d'émission des électrodes d'émission sont agencées de manière opposée.

3. Réseau émetteur multi-électrode selon la revendication 1, dans lequel dans chaque groupe d'émetteurs positifs et d'émetteurs négatifs correspondants, les têtes d'émission sont agencées de manière opposée.

4. Réseau émetteur multi-électrode selon la revendication 1, dans lequel le cadre fixe présente n jeux de barres, et est constitué de *n* + 1 tubes fixes horizontaux et de deux tubes de support longitudinaux reliés entre eux, dans lequel chaque barre est un rectangle consistant en deux tubes fixes horizontaux et deux tubes de support longitudinaux, et un émetteur positif et un émetteur négatif de chaque barre sont fixés sur les tubes fixes horizontaux.

5. Réseau émetteur multi-électrode selon la revendication 4, dans lequel les barres adjacentes partagent un tube fixe horizontal commun et deux groupes d'électrodes d'émission de la même polarité sont installés sur les deux côtés de chaque tube fixe horizontal.

6. Réseau émetteur multi-électrode selon la revendication 4, dans lequel une ligne de raccordement commune de l'émetteur est fixée dans les tubes fixes horizontaux, et elle est raccordée à la borne correspondante à travers les tubes fixes horizontaux.

7. Réseau émetteur multi-électrode selon la revendication 5, dans lequel deux groupes d'électrodes d'émission dans le tube fixe horizontal partagent une ligne de raccordement commune, la ligne de raccordement commune de l'émetteur est située à l'intérieur du tube et raccordée à la borne correspondante à travers le tube fixe horizontal.

8. Réseau émetteur multi-électrode selon la revendication 1, dans lequel une traîne d'équilibrage est installée de l'autre côté du cadre fixe.
